Europäisches Patentamt

European Patent Office

Office européen des brevets

(11) Veröffentlichungsnummer: **0 303 213**
**A2**

## (12) EUROPÄISCHE PATENTANMELDUNG

(21) Anmeldenummer: **88112860.7**

(22) Anmeldetag: **06.08.88**

(51) Int. Cl.⁴: **H02P 6/02**

Ein Antrag gemäss Regel 88 EPÜ auf Hinzufügung einer Seite an die Beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **11.08.87 DE 3726662**

(43) Veröffentlichungstag der Anmeldung:
**15.02.89 Patentblatt 89/07**

(84) Benannte Vertragsstaaten:
**AT BE CH DE ES FR GB IT LI LU NL SE**

(71) Anmelder: **Standard Elektrik Lorenz Aktiengesellschaft Lorenzstrasse 10 D-7000 Stuttgart 40(DE)**

(72) Erfinder: **Hauschild, Andreas Mathias-Grünewald-Weg 4 D-8300 Landshut(DE)**

(74) Vertreter: **Pohl, Heribert, Dipl.-Ing et al Standard Elektrik Lorenz AG Patent- und Lizenzwesen Postfach 30 09 29 D-7000 Stuttgart 30(DE)**

(54) **Schaltungsanordnung zur Drehzahleinstellung eines elektronisch kommutierten Gleichstrommotors.**

(57) Es soll das technische Problem gelöst werden, einen elektronisch kommutierten, insbesondere einen für einen Lüfterantrieb eingesetzten Gleichstrommotor mit einfachen Mitteln in der Drehzahl zu steuern.

Die Lösung besteht aus einem zwischen Spannungsquelle und Kommutierungsschaltung eingesetzten Spannungsregler-IC, dessen Masseanschluß über eine Diode und einen Drehzahlgeber, z.B. ein Potentiometer, mit der Masse der Spannungsquelle verbunden ist.

FIG.1

EP 0 303 213 A2

# Schaltungsanordnung zur Drehzahleinstellung eines elektronisch kommutierten Gleichstrommotors

Die Erfindung betrifft eine Schaltungsanordnung zur Drehzahleinstellung eines an eine Gleichstromquelle angeschlossenen elektronisch kommutierten Gleichstrommotors.

Mit der Erfindung soll folgendes technische Problem gelöst werden:

1. Die Schaltungsanordnung zur Drehzahleinstellung soll einen einfachen Aufbau aufweisen, damit alle Bauteile - mit Ausnahme des Drehzahlgebers - auf der die Kommutierungsschaltung tragenden, im Motor angeordneten Leiterplatte untergebracht werden können.

2. Die Schaltungsanordnung soll mit einfachen Mitteln so ausgelegt werden können, daß die kleinste einstellbare Betriebsspannung des Motors oberhalb der Anlaufspannung des Motors liegt.

3. Die Schaltungsanordnung soll so ausgelegt sein, daß sie für verschiedene Betriebsspannungen und das Zusammenwirken mit verschiedenen Drehzahlgebern geeignet ist.

Dieses technische Problem ist erfindungsgemäß dadurch gelöst, daß zwischen Gleichstromquelle und elektronischer Kommutierungsschaltung ein Spannungsregler-IC angeordnet ist, dessen Masseanschluß über eine Diode mit einem Steuereingang verbunden ist, zwischen welchem und einer Elektrode der Gleichspannungsquelle ein Drehzahlgeber angeordnet ist

Vorteilhafte Ausgestaltungen der Erfindung sind in den Ansprüchen 2 bis 5 enthalten. Sie ist nachstehend anhand der Figuren 1 bis 4 näher erläutert. Es zeigen:

Fig. 1 die Schaltungsanordnung eines elektronisch kommutierten Gleichstrommotors mit einer Ausführungsform der erfindungsgemäßen Schaltungsanordnung zur Drehzahleinstellung,

Fig. 2a die Schaltungsanordnung gemäß Fig. 1 mit einem Drehzahlgeber zum diskontinuierlichen Verstellen der Motordrehzahl,

Fig. 2b die Drehzahlkennlinie für die Anordnung gemäß Fig. 2a,

Fig. 3a die Schaltungsanordnung gemäß Fig. 1 mit einem Drehzahlgeber zum kontinuierlichen manuellen Verstellen der Motordrehzahl,

Fig. 3b die Drehzahlkennlinie für die Anordnung gemäß Fig. 3a,

Fig. 4a die Schaltungsanordnung gemäß Fig. 1 mit einem Drehzahlgeber zum kontinuierlichen manuellen und temperaturabhängigen Verstellen der Motordrehzahl und

Fig. 4b die Drehzahlkennlinie für die Anordnung gemäß Fig. 4a.

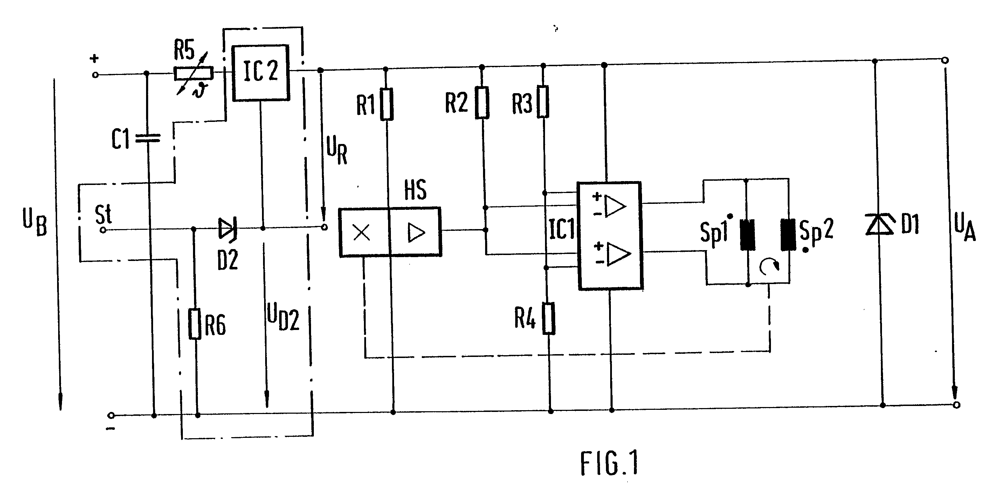

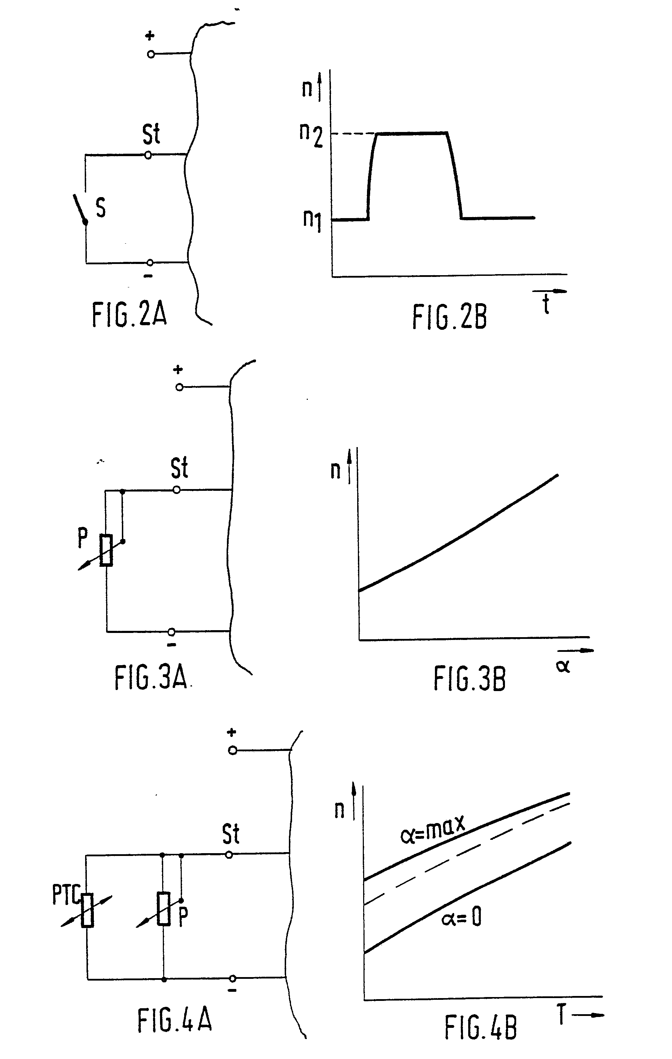

Fig. 1 verdeutlicht die Gesamtschaltungsanordnung eines elektronisch kommutierten Gleichstrommotors einschließlich einer Ausführungsform der erfindungsgemäßen Schaltungsanordnung zur Drehzahleinstellung. Die Schaltungsanordnung zur Kommutierung des Gleichstrommotors ist dem Prinzip nach bekannt, beispielsweise aus der DE-OS 34 04 523. Mit Sp1 und Sp2 sind die parallel geschalteten Ständerspulen bezeichnet. Der permanentmagnetische Läufer ist durch den Drehrichtungspfeil unterhalb der Ständerspulen angedeutet. Die strichlierte Linie zwischen dem Drehrichtungspfeil und dem Hall-IC HS soll verdeutlichen, daß das Hall-IC HS in Abhängigkeit von der Drehstellung des permanentmagnetischen Läufers gesteuert wird. Zur Kommutierungsschaltung gehören außer dem Hall-IC HS, der Doppel-Leistungsoperationsverstärker IC1 und die Widerstände R1 bis R4. Das Hall IC HS liefert in Abhängigkeit von der Stellung des Läufers in Verbindung mit dem Arbeitswiderstand R2 ein Signal, welches zwischen dem positiven und negativen Wert der Gleichstromquelle $U_A$ pendelt und einem Eingang des IC1 zugeführt wird. Der andere Eingang des IC1 liegt über das Widerstandsnetzwerk R3, R4 auf der halben Spannung von $U^A$. Das hat zur Wirkung, daß jeweils der eine Ausgang des IC1 positives und der andere Ausgang negatives Potential führt. Wenn das Hall-IC HS in seinen anderen Zustand gelangt, dann kehren sich diese Potentiale um.

Bei einer auf die vorstehend erläuterte Weise erfolgten Bestromung der Ständerwicklung wird auf den Läufer ein Drehmoment ausgeübt, welches ihm eine kontinuierliche Drehbewegung verleiht. Bei dem Widerstand R1 handelt es sich um einen verhältnismäßig niederohmigen Widerstand, welcher dem Schutz des Hall-IC HS dient. Bei dem Widerstand R5 handelt es sich um einen PTC-Widerstand, welcher dem Schutz der Ständerwicklung und der elektronischen Bauelemente dient, weil er beim Auftreten höherer Ströme (z.B. beim Blockieren des Läufers durch äußere Einwirkung oder bei unzulässig hohen Umgebungstemperaturen) den Ständerstrom auf niedrige Werte begrenzt. Der Kondensator C1 dient der Unterdrückung von Störspannungen auf den Versorgungsleitungen von der Gleichspannungsquelle $U_B$ und die Diode D1 unterdrückt kurzzeitige Überspannungen im Kommutierungskreis.

Die Schaltungsanordnung zur Drehzahleinstellung besteht aus den Bauelementen, welche in Fig. 1 in dem aus strichpunktierten Linien gebildeten Kasten angeordnet sind, nämlich dem Spannungsregler-IC IC2, der Diode D2 und dem Widerstand R6. Der Eingang des IC2 ist über den Widerstand R5 mit der positiven Elektrode der Betriebsspannung $U_B$ verbunden, während der Ausgang von IC2 mit dem Eingang der Kommutierungsschaltung verbunden ist. Der Masseanschluß des IC2 ist über die Diode D2 zum Steueranschluß St geführt.

Bei der aus Fig. 1 ersichtlichen Ausführungsform der Schaltungsanordnung zur Drehzahleinstellung ist das Spannungsregler-IC in der Verbindungsleitung zum positiven Anschluß von $U_B$ angeordnet. Bei dem Spannungsregler-IC soll es sich vorzugsweise um ein sogenanntes "Very-Low-Drop"-Regler-IC handeln. Grundsätzlich kann für die Schaltungsanordnung zur Drehzahleinstellung auch ein "Negativ"-Spannungsregler-IC verwendet werden. Ein solches wäre dann in der Verbindungsleitung zum negativen Anschluß von $U_B$ angeordnet, und die übrige Schaltungsanordnung zur Drehzahleinstellung wäre dann spiegelbildlich zu der in Fig. 1 gezeigten Schaltungsanordnung.

Mit der Diode D2 wird die minimal zulässige Ausgangsspannung eingestellt. Die Ausgangsspannung $U_A$ ergibt sich - wie aus Fig. 1 zu erkennen - zu:

$$U_A = U_R + U_{D2}.$$

Da die Reglerspannung $U_R$ konstant ist, kann die minimale Ausgangsspannung $U_A$ durch eine entsprechende Wahl einer Diode als D2 und somit durch die Spannung $U_{D2}$ eingestellt werden. Elektronisch kommutierte Gleichstrommotoren zum Antrieb von Lüftern werden überwiegend mit 12V und 24V betrieben. Wenn der Motor für 24V ausgelegt ist, dann muß die minimale Ausgangsspannung $U_A$ 8V betragen. Als D2 wird dann eine Z-Diode mit einer Durchbruchspannung von 3V verwendet. Dies ist die Schaltungsanordnung, wie sie aus Fig. 1 ersichtlich ist.

Wenn mit der gleichen Schaltungsanordnung ein für 12V ausgelegter Motor in der Drehzahl gesteuert werden soll, dann ist eine minimale Ausgangsspannung $U_A$ von 5,5V erfordrerlich. Sie wird dadurch erzeugt, daß die Z-Diode D2 gemäß Fig. 1 umgepolt, d.h. in Flußrichtung betrieben wird. Wenn in beiden Fällen die gleiche Diode verwendet wird, vereinfacht sich die Lagerhaltung. Anstelle der in Flußrichtung betriebenen Z-Diode kann aber auch eine in Flußrichtung betriebene Kleinsignaldiode verwendet werden.

Der Widerstand R6 dient zur Linearisierung der Kennlinie der Ausgangsspannung $U_A$ und zur Begrenzung der maximalen Ausgangsspannung $U_A$.

In den Figuren 2 bis 4 ist die unterschiedliche Drehzahleinstellung beim Motor durch verschiedene Beschaltung des Steuereinganges verdeutlicht.

Bei der Ausführungsform gemäß Fig. 2a ist zwischen dem Steuereingang St und der negativen Elektrode der Betriebsspannung $U_B$ ein Schalter S angeordnet. Die dazugehörende Drehzahlkennlinie ist aus Fig. 2b ersichtlich, in welcher die Drehzahl n über der Zeit t aufgetragen ist. Durch das Schließen des Schalters S wird der Steuereingang auf Masse gelegt. Dadurch stellt sich eine niedrige Ausgangsspannung $U_A$ ein, bei welcher der Motor mit der Drehzahl $n_1$ läuft. Bei geöffnetem Schalter S stellt sich eine Ausgangsspannung $U_A$ ein, welche der Summe aus den Spannungsabfällen an R6 und D2 sowie der Festspannung des IC2 entspricht. Bei dieser Spannung läuft der Motor mit $n_2$.

Bei der Ausführungsform gemäß Fig. 3a ist zur kontinuierlichen Drehzahleinstellung des Motors zwischen den Steuereingang St und Masse ein Potentiometer P geschaltet, welches eine positiv logarithmische Widerstandskennlinie besitzen soll. Bei richtiger Wahl des Wertes für R6 ergibt sich - wie aus Fig. 3b ersichtlich - eine nahezu lineare Kennlinie für die Abhängigkeit der Motordrehzahl n von dem Verstellwinkel α des Potentiometers P. Bei dieser Ausführungsform ergibt sich die minimale Ausgangsspannung $U_A$ durch die Null-Ohm-Position des Potentiometers P und der maximale Wert für $U_A$ durch den Gesamtspannungsabfall in dem Krei aus IC2, D2 und der Parallelschaltung aus P und R6.

Bei der Ausführungsform gemäß Fig. 4a ist parallel zu dem im Zusammenhang mit den Figuren 3a und 3b bereits erläuterten Potentiometer P zusätzlich noch ein PTC-Widerstand geschaltet. Mit dieser Anordnung ist die Drehzahlsteuerung des Motors in Abhängigkeit von der Temperatur möglich. Bei dieser Beschaltung des Steuereinganges St ergibt sich bei der Drehzahl n in Abhängigkeit von der Temperatur T eine Kennlinienschar mit dem Verstellwinkel α des Potentiometers P als Parameter. Wie aus den Kennlinien in Fig. 4b ersichtlich, bewirkt die Widerstands-Temperatur-Charakteristik des PTC-Widerstandes, daß die Drehzahl des Motors mit steigender Umgebungstemperatur ebenfalls ansteigt. Wenn eine reine Temperatursteuerung der Motordrehzahl gewünscht wird, kann das Potentiometer P auch entfallen.

## Ansprüche

1. Schaltungsanordnung zur Drehzahleinstellung eines an eine Gleichstromquelle angeschlossenen elektronisch kommutierten Gleichstrommotors, **dadurch gekennzeichnet,** daß zwischen Gleichstromquelle ($U_B$) und elektronischer Kommutierungsschaltung ein Spannungsregler-IC (IC2) angeordnet ist, dessen Masseanschluß über eine Diode (D2) mit einem Steuereingang (St) verbunden ist, zwischen welchem und einer Elektrode der Gleichspannungsquelle ein Drehzahlgeber angeordnet ist.

2. Schaltungsanordnung nach Patentanspruch 1, dadurch gekennzeichnet, daß als Drehzahlgeber ein elektrischer Schalter (S) verwendet wird.

3. Schaltungsanordnung nach Patentanspruch 1, dadurch gekennzeichnet, daß als Drehzahlgeber ein Potentiometer (P) verwendet wird.

4. Schaltungsanordnung nach Patentanspruch 1, dadurch gekennzeichnet, daß als Drehzahlgeber ein PTC-Widerstand (PTC) verwendet wird.

5. Schaltungsanordnung nach Patentanspruch 1, dadurch gekennzeichnet, daß als Drehzahlgeber die Parallelschaltung aus einem Potentiometer (P) und einem PTC-Widerstand (PTC) verwendet wird.

FIG.1

EP 0 303 213 A2

A. Hauschild 2
8. 6. 88

FIG.2A

FIG.2B

FIG.3A

FIG.3B

FIG.4A

FIG.4B

A. Hauschild 2
8. 6. 88